# EUROPÄISCHE PATENTSCHRIFT

(11) **EP 0 893 154 B1**
(45) Veröffentlichungstag und Bekanntmachung des Hinweises auf die Patenterteilung: **11.08.2004**
(21) Anmeldenummer: 98112339.1
(22) Anmeldetag: 03.07.1998
(51) Int. Cl.: B01D 53/94, F01N 3/08

(54) **Verfahren und Vorrichtung zur De-Sulfatierung von NOx-Speichern bei DI-Dieselmotoren**
Process and apparatus for desulphating of NOx-traps for DI-Diesel engines
Procédé et dispositif pour désulfater les pièges NOx des moteurs Diesel à injection directe

(30) Priorität: 23.07.1997 DE 19731623
(43) Veröffentlichungstag der Anmeldung: 27.01.1999
(73) Patentinhaber: Volkswagen Aktiengesellschaft, 38436 Wolfsburg (DE)
(72) Erfinder: Pott, Ekkehard, Dipl.-Ing., 38518 Gifhorn (DE); König, Axel, Dr., 38448 Wolfsburg (DE)
(74) Vertreter: Meyer, Enno, Dr.

(56) Entgegenhaltungen:
- EP-A- 0 580 389
- EP-A- 0 625 633
- EP-A- 0 761 286
- DE-A- 19 626 837
- US-A- 4 585 632

## Beschreibung

Die Erfindung betrifft ein Verfahren zur De-Sulfatierung von NOx-Speichern bzw. Speicherkatalysatoren bei Dl-Dieselmotoren sowie eine Vorrichtung zur Durchführung des Verfahrens.

NOx-Speicher bzw. Speicherkatalysatoren, die zur Speicherung von NOx bei Brennkraftmaschinen im Magerbetrieb dienen, werden während des Betriebs durch den im Kraftstoff enthaltenen Schwefel und dessen Einlagerung als Sulfat in dem NOx-Speicherkatalysator vergiftet, so daß die Sulfateinlagerung die NOx-Einlagerung blockiert. Es ist daher in periodischen Abständen eine Entschwefelung bzw. eine De-Sulfatierung des NOx-Speichers durchzuführen. Eine derartige Schwefelvergiftung des NOx-Speichers ist überwiegend oder vollständig reversibel, sofern in reduzierender Umgebung eine De-Sulfatierungs-Mindesttemperatur überschritten wird, die größer als 600 °C ist. Zur Reduzierung des NOx-Speichers wird dagegen nur eine Temperatur von größer als 200 °C benötigt.

Die vollständige De-Sulfatierung eines vollkommenen mit Sulfat vergifteten NOx-Speichers mit CO als Reduktionsmittel ist bei Mager-Ottomotoren und Dl-Ottomotoren für einen Betrieb mit λ < 1 und einer De-Sulfatierungstemperatur von (typisch) ≥ 700 °C möglich, wobei die Mindest-De-Sulfatierungstemperatur je nach Speichermaterial 500 - 750 °C betragen kann. Da bei Mager-Ottomotoren und DI-Ottomotoren ein Betrieb mit ≤ 1 auch über längere Zeiträume möglich ist, kann im allgemeinen eine Einstellung der Randbedingungen zur De-Sulfatierung problemlos realisiert werden.

Demgegenüber ist bei Dieselmotoren, insbesondere bei Dl-Dieselmotoren, ein unterstöchiometrischer Motorbetrieb allenfalls im unteren und mittleren Teillastbereich möglich. Die Abgastemperaturen liegen in den Typprüf-Fahrzyklen und dem Realverkehr im allgemeinen unter 500 °C und überschreiten höchstens bei Vollast die 700 °C-Marke. Ein Regenerationsverfahren mittels eines längerfristigen Betriebes mit λ ≤ 1 wie bei Ottomotoren ist daher bei Dieselmotoren schwer zu realisieren.

Aus der Druckschrift DE-A-19616837 ist ein Dieselmotor mit einer Drossel im Ansaugtrakt bekannt, der eine Abgasreinigungsanlage mit den Merkmalen des Oberbegriffs des Anspruchs 1 aufweist. Ferner ist aus der Druckschrift ein Verfahren zur De-Sulfatierung der gattungsgemäßen Abgasreinigungsanlage bekannt, bei dem abgastemperatursteigernde Maßnahmen eingeleitet und ein Abgasstrom mit möglichst wenig O₂ erzeugt wird.

Aus der Druckschrift EP-A-0761286 ist eine Abgasreinigungsanlage für magerbetreibbare Brennkraftmaschinen bekannt, wobei die Abgasreinigungsanlage einen NOx-Speicherkatalysator mit vorgeschaltetem SOx-Speicher aufweist.

Der Erfindung liegt die Aufgabe zugrunde, eine Abgasreinigungsanlage mit einem NOx-Speicher für DI-Dieselmotoren und ein Verfahren zur De-Sutfatierung einer derartigen Abgasreinigungsanlage zu schaffen, mit denen eine sichere De-Sulfatierung während des Fahrbetriebs möglich ist.

Diese Aufgabe wird durch eine Abgasreinigungsanlage nach Anspruch 1 sowie durch ein Verfahren nach Anspruch 7 gelöst. Bevorzugte Ausgestaltungen der Erfindung sind Gegenstand der Unteransprüche.

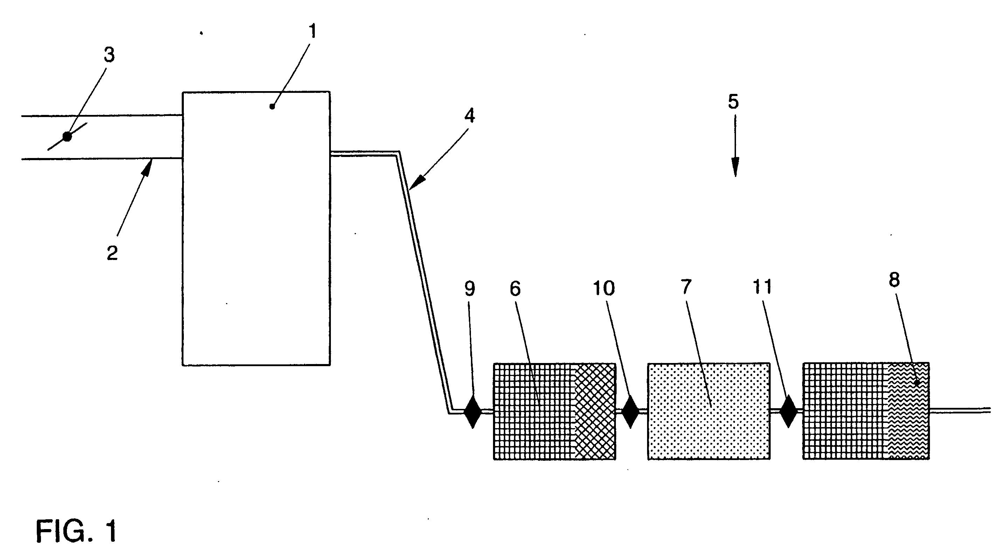

Die Erfindung wird nachfolgend anhand der Zeichnung erklärt, wobei Fig. 1 ein Schema einer Abgasanlage zur Durchführung des erfindungsgemäßen Verfahren zeigt.

Die Fig. 1 zeigt schematisch einen Dl-Dieselmotor 1 mit vorgeschaltetem Saugrohr 2 und darin eingebauter Drossel 3. Das Abgas des Dieselmotors 1 gelangt über eine Abgasleitung 4 in eine Abgasreinigungsanlage 5 bestehend aus einem ersten Katalysator 6, der als Oxidationskatalysator ausgelegt ist, einem zweiten Katalysator 7, der als NOx-Speicher ausgelegt ist, und einem dritten Katalysator 8, der ebenfalls als Oxidationskatalysator ausgelegt ist. Temperaturfühler 9, 10, 11 sind vor jedem der Katalysatoren angeordnet, wobei die Anordnung der Temperaturfühler 10 und 11 alternativ sein kann. Der erste Katalysator 6 kann optional mit einer Schwefelfalle oder optional mit einem Steam-Reformer versehen sein, was in der Fig. 1 durch unterschiedliche Schraffierung des ersten Katalysators 6 angedeutet ist. Ferner kann der dritte Katalysator 8 optional mit einer O₂-speichernden Waschcoat versehen sein, wobei das O₂-speichernde Waschcoat zwingend ist, falls der zweite Katalysator 7 nur ein NOx-Speicher ist, während das O₂-speichernde Waschcoat optional ist, falls der zweite Katalysator 7 ein NOx-Speicherkatalysator ist, was in der Fig. 1 durch die unterschiedliche Schraffierung des hinteren Teils des dritten Katalysators 8 angedeutet ist.

Der dem Motor 1 mit Ansaugluftdrossel 3 nachgeschaltete erste Katalysator 6, der als Oxidationskatalysator ausgelegt ist, kann auch auf einer HC-Wasserdampf-Reformierung zur CO-Bildung hin optimiert werden, beispielsweise durch Zugabe von Rh zur üblicherweise verwendeten Pt-Beschichtung. Zusätzlich kann auf demselben Träger des ersten Katalysators 6 eine Schwefelfalle (nicht dargestellt) auf einem hinteren Teilbereich oder auf dem gesamten Träger aufgebracht werden.

Der stromabwärts liegende zweite Katalysator 7 ist als NOx-Speicher ausgelegt, der bei Fehlen einer Schwefelfalle auf dem ersten Katalysator 6 auch noch sulfatspeichernde Funktionen übernimmt. Der zweite Katalysator 7 kann durch Zugabe einer Edelmetallkomponente (nicht dargestellt) auch als Speicherkatalysator arbeiten.

Falls der zweite Katalysator 7 ausschließlich als Speicher arbeitet, ist am Ende der Katalysatorkette ein dritter Katalysator 8 erforderlich, der ausschließlich als Oxidationskatalysator arbeitet. Im hinteren Abschnitt dieses dritten Katalysators 8 kann ein sauerstoffspeichernder Waschcoat (nicht dargestellt) vorgesehen werden. Falls der zweite Katalysator 7 mit Edelmetallkomponenten belegt ist, ist der dritte Katalysator 8 nicht unbedingt erforderlich. Wegen der nachfolgend beschriebenen Nebenproduktbildung bei der De-Sulfatierung ist ein Oxidationskatalysator 8 als dritter Katalysator mit teilweise oder vollständig sauerstoffspeicherndem Waschcoat jedoch sinnvoll.

Im folgenden wird nun anhand der Fig. 1 das Verfahren zur De-Sulfatierung des NOx-Speichers 7 bzw. -Speicherkatalysators 7 beschrieben. Um die zur De-Sulfatierung erforderliche Temperatur erreichen zu können, werden bei Vorliegen einer Mindest-Abgastemperatur von ca. 200 °C am ersten Katalysator 6 abgastemperatursteigemde Maßnahmen eingeleitet. Dies kann durch Androsselung des Dieselmotors 1, wobei zunächst ein Betrieb mit λ > 1 beibehalten wird, und durch Verschieben des Spritzbeginns unter Beachtung der Partikelemissionen in Richtung "spät" geschehen. Bei Motoren 1 mit VE-Pumpen oder PD-Elementen (Pumpe - Düse) kann zusätzlich eine Kraftstoffeindüsung 12 in das Abgas stromaufwärts des ersten Katalysators 6 vorgenommen werden. Mit zunehmender Annäherung an λ = 1 steigt der Schadstoffanteil im Abgas stark an, so daß auf eine zusätzliche Kraftstoffeindüsung dann Verzichtet werden kann. So steigt beim Androsseln von λ = 1,1 auf λ = 1,01 die chemisch gebundene Energie im Abgas von ca. 0,5 kW auf 5 kW an. Bei Common-Rail-Motoren kann durch Nacheinspritzung ebenfalls verdampfter, aber nicht verbrannter Kraftstoff vor dem ersten Katalysator 6 erzeugt werden. Die Oxidation des Kraftstoffes auf der katalytisch wirksamen Oberfläche des ersten Katalysators 6 bewirkt eine Temperatursteigerung auf ein Niveau oberhalb der Mindest-De-Sulfatierungstemperatur von beispielsweise 700 °C. Um eine vollständige Durchwärmung der schwefelvergifteten Katalysatoren 6, 7, 8 sicherzustellen, wird die eigentliche De-Sulfatierung erst dann eingeleitet, wenn der entsprechende Temperaturfühler 10, 11 ebenfalls eine Temperatur oberhalb der Mindest-De-Sulfatierungstemperatur anzeigt. Dabei ist im Falle, in dem auf dem ersten Katalysator 6 eine Schwefelfalle realisiert ist, der hinter dem ersten Katalysator 6 angeordnete Temperaturfühler 10 für das Verfahren wesentlich, während in dem Falle, in dem auf dem ersten Katalysator 6 keine Schwefelfalle angeordnet ist, der hinter dem zweiten Katalysator 7 angeordnete Temperaturfühler 11 für das Verfahren wesentlich ist.

Zur De-Sulfatierung durch Anfetten des Abgases wird der Dl-Dieselmotor 1 in bekannter Weise auf einen λ < 1 Betrieb gedrosselt, so daß ein nahezu sauerstoffreier Abgasstrom mit 1 bis 10% CO entsteht. Bei dem Vorhandensein von Steam-Reforming-Komponenten auf dem ersten Katalysator 6 kann alternativ die zusätzliche Kraftstoffeinbringung in die Abgasanlage 5 so erhöht werden, daß über den Steam-Reformer des ersten Katalysators 6 die benötigte CO-Menge erzeugt wird. Die aus der Schwefelfalle und/oder dem NOx-Speicher 7 freigesetzten Sulfate und Nebenprodukte (z.B. H₂S) strömen durch den NOx-Speicher 7, in dem sie aber weder oxidiert noch eingelagert werden können, da beide Prozesse im fetten Abgasstrom nicht ablaufen können. Erst in der sauerstoffspeichernden Zone des nachgeschalteten dritten Katalysators 8 können die Nebenprodukte zu weniger geruchsintensiven Emissionen umgesetzt werden. Für die gesamte De-Sulfatierung ist mit Aufheizzeiten von ca. 30 s und Regenerationszeiten von 15 - 30 s bei 700 °C zu rechnen. Je nach Speichermaterial und Abmessungen der Katalysatoren 6, 7, 8 können die Werte nach oben und unten abweichen.

### BEZUGSZEICHENLISTE

- 1 -: DI-Dieselmotor
- 2 -: Saugrohr
- 3 -: Drossel
- 4 -: Abgasleitung
- 5 -: Abgasreinigungsanlage
- 6 -: Oxidationskatalysator
- 7 -: NOx-Speicher
- 8 -: Oxidationskatalysator
- 9 -: Temperaturfühler
- 10 -: Temperaturfühler
- 11 -: Temperaturfühler
- 12 -: Kraftstoffeindüsung

## Patentansprüche

1. Abgasreinigungsanlage umfassend einen Dieselmotor (1), der eine Drossel (3) im Saugrohr (2) aufweist, wobei die Abgasreinigungsanlage (5) einen Oxidationskatalysator (6) und einem nachfolgenden NOx-Speicher (7) aufweist,
**dadurch gekennzeichnet, daß**
der Oxidationskatalysator (6) mit einer Schwefelfalle und/oder einem Steam-Reformer ausgerüstet ist und stromabwärts des NOx-Speichers (7) ein weiterer Oxidationskatalysator (8) angeordnet ist.

2. Abgasreinigungsanlage nach Anspruch 1, **dadurch gekennzeichnet, daß** bei PD- oder VE-Motoren (1) vor dem Oxidationskatalysator (6) eine Kraftstoffeindüsung (12) vorgesehen ist.

3. Abgasreinigungsanlage nach Anspruch 1 oder 2, **dadurch gekennzeichnet, daß** der weitere Oxidationskatalysator (8) eine O₂-speichemde Waschcoat aufweist.

4. Abgasreinigungsanlage nach einem der Ansprüche 1 bis 3, **dadurch gekennzeichnet, daß** der NOx-Speicher (7) als Katalysator ausgelegt ist.

5. Abgasreinigungsanlage nach einem der Ansprüche 1 bis 4, **dadurch gekennzeichnet, daß** vor dem ersten Katalysator (6) ein Temperaturfühler (9) und zwischen dem ersten Oxidationskatalysator (6) und dem NOx-Speicher (7) und/oder zwischen dem NOx-Speicher (7) und dem stromabwärtigen Oxidationskatalysator (8) jeweils ein Temperaturfühler (10, 11) angeordnet ist.

6. Verfahren zur De-Sulfatierung einer Abgasreinigungsanlage (5) nach einem der Ansprüche 1 bis 5, wobei das Verfahren die folgenden Schritte aufweist:
(a) Einleiten abgastemperatursteigernder Maßnahmen am Oxidationskatalysator (6) beim Vorliegen der Notwendigkeit einer De-Sulfatierung und dem Vorliegen einer Mindestabgastemperatur,
(b) Erzeugen eines nahezu sauerstoffreien Abgasstroms mit einem Gehalt von 1 bis 10 % CO nach Erreichen der zur De-Sulfatierung notwendigen Mindest-De-Sulfatisierungstemperatur am NOx-Speicher (7), und
(c) Rückkehr zu normalen Motorbetriebsbedingungen nach dem Ablauf der notwendigen Regenerationszeit des NOx-Speichers (7).

7. Verfahren nach Anspruch 6, **dadurch gekennzeichnet, daß** die temperatursteigernde Maßnahme durch Androsselung des Dieselmotors (1) unter Beibehaltung eines Betriebs mit λ > 1 erzeugt wird.

8. Verfahren nach Anspruch 7, **dadurch gekennzeichnet, daß** die temperatursteigemde Maßnahme durch Androsselung des Dieselmotors (1) auf λ = 1,01 - 1,05 erzeugt wird, wobei neben der thermischen auch eine katalytische Aufheizung erzielt wird.

9. Verfahren nach Anspruch 7 oder 8, **dadurch gekennzeichnet, daß** die temperatursteigernde Maßnahme durch Verschieben des Spritzbeginns in Richtung "spät" erreicht wird.

10. Verfahren nach einem der Ansprüche 7 bis 9, **dadurch gekennzeichnet, daß** bei Dieselmotoren (1) mit VE-Pumpen und PD-Elementen zusätzlich eine Kraftstoffeindüsung (12) in das Abgas stromaufwärts des ersten Oxidationskatalysators (6) durchgeführt wird.

11. Verfahren nach einem der Ansprüche 7 bis 9, **dadurch gekennzeichnet, daß** bei Common-Rail-Dieselmotoren (1) eine Nacheinspritzung als weitere temperatursteigernde Maßnahme vorgenommen wird.

12. Verfahren nach einem der Ansprüche 6 bis 11, **dadurch gekennzeichnet, daß** das Erzeugen des sauerstoffreien Abgases im Schritt (b) durch Drosselung des Dieselmotors (1) auf einem Betrieb mit λ < 1 erzielt wird.

13. Verfahren nach einem der Anspruche 6 bis 11, **dadurch gekennzeichnet, daß** der erste Oxidationskatalysator (6) Steam-Reforming-Komponenten aufweist, so daß der CO-Gehalt des sauerstoffreien Abgases durch zusätzliche Kraftstoffeinbringung vor dem ersten Oxidationskatalysator (6) erzeugt wird.

14. Verfahren nach einem der Ansprüche 6 bis 13, **dadurch gekennzeichnet, daß** das Abgas nach dem Verlassen des NOx-Speichers (7) erneut eine zweite Oxidationsstufe (8) durchläuft.

## Claims

1. Exhaust-gas purification installation comprising a diesel engine (1), which has a throttle (3) in the induction pipe (2), the exhaust-gas purification installation (5) having an oxidation catalytic converter (6) and a downstream NOx store (7), **characterized in that** the oxidation catalytic converter (6) is equipped with a sulphur trap and/or a steam reformer and a further oxidation catalytic converter (8) is arranged downstream of the NOx store (7).

2. Exhaust-gas purification installation according to Claim 1, **characterized in that** in the case of PD or VE engines (1), a fuel injection (12) is provided upstream of the oxidation catalytic converter (6).

3. Exhaust-gas purification installation according to Claim 1 or 2, **characterized in that** the further oxidation catalytic converter (8) has an O₂ storing washcoat.

4. Exhaust-gas purification installation according to one of Claims 1 to 3, **characterized in that** the NOx store (7) is designed as a catalytic converter.

5. Exhaust-gas purification installation according to one of Claims 1 to 4, **characterized in that** a temperature sensor (9) is arranged upstream of the first catalytic converter (6), and a temperature sensor (10, 11) is respectively arranged between the first oxidation catalytic converter (6) and the NOx store (7) and/or between the NOx store (7) and the downstream oxidation catalytic converter (8).

6. Process for desulphating an exhaust-gas purification installation (5) according to one of Claims 1 to 5, in which the process includes the following steps:
(a) initiation of measures to increase the exhaust-gas temperature at the oxidation catalytic converter (6) when there is a need for desulphating and when a minimum exhaust-gas temperature is present,
(b) generation of a virtually oxygen-free exhaust-gas stream containing from 1 to 10% of CO after the minimum desulphating temperature required for the desulphating is reached at the NOx store (7), and
(c) return to the normal engine operating conditions after the required regeneration time for the NOx store (7) has elapsed.

7. Process according to Claim 6, **characterized in that** the temperature-increasing measure is generated by partial throttling of the diesel engine (1) while maintaining operation with λ > 1.

8. Process according to Claim 7, **characterized in that** the temperature-increasing measure is generated by partial throttling of the diesel engine (1) to λ = 1.01 - 1.05, which achieves catalytic heating in addition to the thermal heating.

9. Process according to Claim 7 or 8, **characterized in that** the temperature-increasing measure is achieved by shifting the start of injection towards "late" position.

10. Process according to one of Claims 7 to 9, **characterized in that** in the case of diesel engines (1) with VE pumps and PD elements, there is an additional injection of fuel (12) into the exhaust gas upstream of the first oxidation catalytic converter (6).

11. Process according to one of Claims 7 to 9, **characterized in that** in the case of common rail diesel engines (1) an afterinjection is carried out as a further temperature-increasing measure.

12. Process according to one of Claims 6 to 11, **characterized in that** the generation of the oxygen-free exhaust gas in step (b) is achieved by throttling the diesel engine (1) to operation with λ < 1.

13. Process according to one of Claims 6 to 11, **characterized in that** the first oxidation catalytic converter (6) includes steam-reforming components, so that the CO content of the oxygen-free exhaust gas is generated by additional introduction of fuel upstream of the first oxidation catalytic converter (6).

14. Process according to one of Claims 6 to 13, **characterized in that** the exhaust gas, on leaving the NOx store (7), once again passes through a second oxidation stage (8).

## Revendications

1. Système de purification des gaz d'échappement comprenant un moteur Diesel (1) qui présente un étranglement (3) dans le collecteur d'admission (2), le système (5) de purification des gaz d'échappement présentant un catalyseur à oxydation (6) suivi d'un accumulateur de NOx (7),
**caractérisé en ce que** le catalyseur à oxydation (6) est équipé d'un piège à soufre et/ou d'un reformeur à vapeur, et un catalyseur à oxydation supplémentaire (8) est disposé en aval de l'accumulateur de NOx (7).

2. Système de purification des gaz d'échappement selon la revendication 1, **caractérisé en ce que**, pour des moteurs (1) PD (à éléments pompe-injecteur) ou VE (à pompes d'injection à distributeur), une injection de carburant (12) est prévue avant le catalyseur à oxydation (6).

3. Système de purification des gaz d'échappement selon la revendication 1 ou 2, **caractérisé en ce que** le catalyseur à oxydation supplémentaire (8) présente une enduction (« washcoat ») accumulatrice d'O₂.

4. Système de purification des gaz d'échappement selon l'une quelconque des revendications 1 à 3, **caractérisé en ce que** l'accumulateur de NOx (7) est conçu comme catalyseur.

5. Système de purification des gaz d'échappement selon l'une quelconque des revendications 1 à 4, **caractérisé en ce qu'**un capteur de température (9) est disposé avant le premier catalyseur (6), et un capteur de température respectif (10, 11) est disposé entre le premier catalyseur à oxydation (6) et l'accumulateur de NOx (7) et/ou entre l'accumulateur de NOx (7) et le catalyseur à oxydation aval (8).

6. Procédé pour désulfater un système (5) de purification des gaz d'échappement selon l'une quelconque des revendications 1 à 5, le procédé présentant les étapes suivantes :
(a) introduction de mesures d'augmentation de la température des gaz d'échappement au niveau du catalyseur à oxydation (6) en présence de la nécessité d'une désulfatation et en présence d'une température minimale des gaz d'échappement,
(b) production d'un flux de gaz d'échappement quasiment exempt d'oxygène avec une teneur de 1 à 10% de CO, à l'atteinte à l'accumulateur de NOx (7) de la température minimale de désulfatation nécessaire pour la désulfatation, et
(c) retour à des conditions normales de fonctionnement du moteur à l'expiration du temps nécessaire de régénération de l'accumulateur de NOx (7).

7. Procédé selon la revendication 6, **caractérisé en ce que** la mesure d'augmentation de température est produite par étranglement du moteur Diesel (1) en conservant un fonctionnement avec λ > 1.

8. Procédé selon la revendication 7, **caractérisé en ce que** la mesure d'augmentation de température est produite par étranglement du moteur Diesel (1) à λ = 1,01 - 1,05, un échauffement catalytique étant obtenu en plus de l'échauffement thermique.

9. Procédé selon la revendication 7 ou 8, **caractérisé en ce que** la mesure d'augmentation de température est obtenue par décalage du début d'injection dans le sens de retard.

10. Procédé selon l'une quelconque des revendications 7 à 9, **caractérisé en ce que**, pour des moteurs Diesel (1) à pompes d'injection à distributeur et à éléments pompe-injecteur, on effectue en plus une injection de carburant (12) dans les gaz d'échappement en amont du premier catalyseur à oxydation (6).

11. Procédé selon l'une quelconque des revendications 7 à 9, **caractérisé en ce que**, pour des moteurs Diesel (1) à injection à rampe commune (« Common Rail »), on effectue une post-injection comme mesure supplémentaire d'augmentation de température.

12. Procédé selon l'une quelconque des revendications 6 à 11, **caractérisé en ce que** la production des gaz d'échappement exempts d'oxygène à l'étape (b) est obtenue par étranglement du moteur Diesel (1) à un fonctionnement avec λ < 1.

13. Procédé selon l'une quelconque des revendications 6 à 11, **caractérisé en ce que** le premier catalyseur à oxydation (6) présente des composants de reformage à la vapeur, de sorte que la teneur en CO des gaz d'échappement exempts d'oxygène est produite par un apport supplémentaire de carburant avant le premier catalyseur à oxydation (6).

14. Procédé selon l'une quelconque des revendications 6 à 13, **caractérisé en ce que** les gaz d'échappement, après avoir quitté l'accumulateur de NOx (7), traversent de nouveau un deuxième étage d'oxydation (8).
